# EUROPEAN PATENT SPECIFICATION

(11) **EP 3 980 716 B1**
(45) Date of publication and mention of the grant of the patent: **24.01.2024**
(21) Application number: 19730392.8
(22) Date of filing: 04.06.2019
(51) Int. Cl.: G01C 21/20, B63B 25/14, G01C 21/00

(54) **METHOD AND APPARATUS FOR AUTOMATED ROUTE MANAGEMENT OF MARINE VESSEL**
VERFAHREN UND VORRICHTUNG ZUR AUTOMATISCHEN ROUTENVERWALTUNG EINES SCHIFFES
PROCÉDÉ ET APPAREIL POUR LA GESTION D'ITINÉRAIRE AUTOMATISÉE D'UN VÉHICULE NAUTIQUE

(43) Date of publication of application: 13.04.2022
(73) Proprietor: Wärtsilä Gas Solutions Norway AS, 1383 Asker (NO)
(72) Inventor: PAULSEN, Torgeir, 1383 ASKER (NO); WITH, Hans Marius, 1383 ASKER (NO); MARTIN, Nicholas, 1383 ASKER (NO); MATA, Esteban, 1383 ASKER (NO)
(74) Representative: Boco IP Oy Ab
(86) International application number: PCT/FI2019/050426
(87) International publication number: WO 2020/245490

(56) References cited:
- JP-A- S5 726 080
- US-A1- 2011 320 073

## Description

### TECHNICAL FIELD

The present application generally relates to automated route and/or operation management method and apparatus for a marine vessel. Furthermore, the present application relates especially to marine vessels system configured to store, operate and transport of liquefied petroleum gases, normally known as LPG.

### BACKGROUND

This section illustrates useful background information without admission of any technique described herein representative of the state of the art.

The present invention relates to automated route management system. The present invention also relates to automation, operation management, optimization and navigation systems.

Different solutions exist for reliquefaction and regasification of LNG or LPG utilizing heat exchangers. Seawater around the marine vessel may be pumped and used as the coolant, intermediate or heater medium within the heat exchanger, depending on the operation setup.

In today's marine vessels, controlling energy management systems, power management systems, as well as navigation systems together requires still a more manual approach of the systems.

However, when planning a voyage or dedicated route there are vast number of parameters and factors that affect the overall efficiency of energy management of the marine vessel due to complexity of the energy production, energy consumption, environmental conditions and restrictions as well as navigational matters. When considering gas solutions (e.g. LPG systems) as part of the equation, that makes optimal efficiency control and route management for a voyage extremely difficult and challenging.

Thus, a solution is needed to enable accurate, efficient, and reliable method for automated route optimization for a marine vessel taking into consideration gas solutions (e.g. LPG) installed on the vessel.

US 2011/0320073 A1 discloses an apparatus and a method for controlling energy consumption in a marine vessels having a plurality of energy consuming users and fuel consuming engines. A voyage management tool enables planning a route and estimating energy consumption on the route.

JP S57 26080 A discloses a cold energy utilization apparatus for liquefied natural gas in a LNG tanker, wherein LNG stream is heated through a heat exchanger and water is used for cooling.

### SUMMARY

Various aspects of examples of the invention are set out in the claims.

According to a first example aspect of the present invention, there is provided a computer-implemented method for automated route management of a marine vessel, the method comprising:
determining route plan information of the marine vessel;
determining seawater characteristic information associated with the route plan information;
receiving operational characteristics of a heat exchanger sub-system of a gas solution system installed on the marine vessel, wherein the heat exchanger sub-system is configured to use seawater as a cooling medium;
generating dynamic control model using the route plan information, the seawater characteristic information and the operational characteristics; and
adjusting the route plan information based on the dynamic control model.

In an embodiment, the seawater characteristic information comprises at least one of the following: seawater temperature information; and seawater salinity information.

In an embodiment, the heat exchanger sub-system is operationally connected to an LPG gas solution system of the marine vessel.

In an embodiment, the heat exchanger sub-system is configured to use seawater as an intermediate medium or a heating medium, and the gas solution system may comprise at least one of the following: LNG system; and CNG system.

In an embodiment, operational characteristics of a heat exchanger sub-system comprises at least one of the following: information about used medium of the heat exchanger sub-system; operation mode of the heat exchanger sub-system; and operation status of the heat exchanger sub-system.

In an embodiment, the route plan information comprises at least one of the following: navigation information for a waypoint or a port; target time or arrival information for the waypoint or the port; and environmental information associated to at least one route of the route plan information. The navigation information may comprise at least one of the following: destination information; remaining travel time information; remaining distance information; waypoint information; emission restricted area information; and environmental restriction information. The target time or arrival information may comprise allocated berth time for the marine vessel at a destination port.

In an embodiment, the environmental information comprises at least one of the following: weather information; wind information; air pressure information; ice information; wave height, frequency or direction information; tidal data; and current information.

In an embodiment, the method further comprises determining energy consumption information based on the dynamic control model. The energy consumption information may represent predicted energy consumption for heat exchanger sub-system and of at least one of the following: hotel load of the marine vessel, at least one propulsion device of the marine vessel, and automation system of the marine vessel. The hotel load may represent load relating to at least one of lighting, heating, ventilation and fresh water generation.

In an embodiment, the method further comprises:
determining, by the dynamic control model, predicted energy consumption information for optional routes with different seawater temperatures; and
adjusting the route plan information associated to route with optimal predicted energy consumption.

In an embodiment, the route with optimal predicted energy consumption corresponds to the route with lowest energy consumption.

In an embodiment, the method further comprises determining a task within the marine vessel automatically based on the dynamic control model.

In an embodiment, the method further comprises controlling an automation element of the marine vessel based on the determined task.

In an embodiment, the automation element of the marine vessel is configured to control at least one of the following: gas solution system; heat exchanger sub-system; power management system; and navigation system.

In an embodiment, the automation element is configured to control the gas solution system for at least one of the following: operation of a reliquefaction unit; and operation of regasification unit.

In an embodiment, the automation element is configured to control the heat exchanger sub-system for operation of a seawater pump for pumping seawater from sea to be used as fluid for the heat exchanger sub-system.

In an embodiment, the method further comprises determining an operational plan comprising tasks to control at least one of the following:
time and location to run gas solution system related processes along a route of the route plan information; and
time and location to run heat exchanger sub-system related processes along a route of the route plan information.

In an embodiment, the method further comprises
determining, by the dynamic control model, arrival time for a waypoint based on the route plan information;
determining, by the dynamic control model, optimal speed profile for the marine vessel to stay longer in colder waters and avoiding waiting time in warmer waters; and
adjusting the route plan information using the optimal speed profile.

In an embodiment, the method further comprises:
receiving actual operating data;
comparing the actual operating data with predicted data generated by the dynamic control model to provide error data; and
adjusting the dynamic control model based on the error data.

In an embodiment, the method further comprises:
receiving operator acknowledgement for the determined task; and
controlling an automation element of the marine vessel based on the determined task in response to the received operator acknowledgement.

In an embodiment, the method further comprises determining a task relating the route plan information automatically based on the dynamic control model.

In an embodiment, the method further comprises dynamically adjusting the route plan information based on the determined task relating to the route plan information.

In an embodiment, the method further comprises dynamically adjusting navigation information of the route plan information.

In an embodiment, the method further comprises dynamically adjusting waypoint information for a dedicated route.

In an embodiment, the method further comprises dynamically adjusting destination information or remaining travel time of the dedicated route.

In an embodiment, the method further comprises updating the dynamic control model in real-time based on the route plan information, the energy consumption information and the characteristic information.

In an embodiment, the method further comprises scheduling of energy consumption or energy generation relating the route plan information automatically based on the dynamic control model.

In an embodiment, the scheduling is based on the dynamic control model generated using at least one of the following:
emission restricted area information of a dedicated route; and
environmental restriction information of a dedicated route.

According to a second example aspect of the present invention, there is provided a marine vessel control apparatus, comprising:
a communication interface for transceiving data;
at least one processor; and
at least one memory including computer program code;
the at least one memory and the computer program code configured to, with the at least one processor, cause the apparatus to:
   determine route plan information of the marine vessel;
   determine seawater characteristic information associated with the route plan information;
   receive operational characteristics of a heat exchanger sub-system of a gas solution system installed on the marine vessel, wherein the heat exchanger sub-system is configured to use seawater as a cooling medium;
   generate dynamic control model using the route plan information, the seawater characteristic information and the operational characteristics; and
   adjust the route plan information based on the dynamic control model.

According to a third example aspect of the present invention, there is provided a computer program embodied on a computer readable medium comprising computer executable program code, which code, when executed by at least one processor of an apparatus, causes the apparatus to:
determine route plan information of the marine vessel;
determine seawater characteristic information associated with the route plan information;
receive operational characteristics of a heat exchanger sub-system of a gas solution system installed on the marine vessel, wherein the heat exchanger sub-system is configured to use seawater as a cooling medium;
generate dynamic control model using the route plan information, the seawater characteristic information and the operational characteristics; and
adjust the route plan information based on the dynamic control model.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic picture of a marine vessel and a system according to an example embodiment of the invention;
Fig. 2 presents an example block diagram of a control apparatus in which various embodiments of the invention may be applied;
Fig. 3 shows a schematic picture of a dynamic control model (DCM) and related information flows according to an example embodiment;
Fig. 4 shows a schematic picture of a system according to an example embodiment;
Fig. 5 presents an example block diagram of a server apparatus in which various embodiments of the invention may be applied;
Fig. 6 presents an example block diagram of a computer apparatus in which various embodiments of the invention may be applied;
Fig. 7 shows a schematic diagram showing a journey of an LPG operated marine vessel from UK to US in accordance with an example embodiment of the invention; and
Fig. 8 shows a flow diagram showing operations in accordance with an example embodiment of the invention.

### DETAILED DESCRIPTION OF THE DRAWINGS

In the following description, like numbers denote like elements.

Embodiments of the invention relate to automated route plan or operation management system of a marine vessel for a voyage between ports or waypoints, for example.

In a marine vessel or a ship, gas, such as Liquefied Petroleum Gas (LPG), may be used as an energy source for one or more combustion engines that operate generators or the main propellers of the marine vessel. LPG may be delivered to the marine vessel in the harbors or during the voyage by fuel tankers, for example. Hybrid solutions exist that provide battery-based backup or auxiliary energy source for the marine vessel as well.

Power production and propulsion system have been targets for continuous adjustment, control and monitoring to achieve optimal efficiency with respect to the vessel performance. Power control and operation optimization is a fundamental part of the control system of a vessel. Likewise, the propulsion system is controlled to produce the required power by using the available electric and/or primary energy. In practice, however, the sufficiency of energy has not been as critical as the efficiency of the devices and their control systems.

By controlling the power, optimization route, driving profile and operations of the separate devices on board, energy can be consumed efficiently and economically. This applies e.g. for gas system operations, such as reliquefaction, individual propulsion units, pumps, automation, lighting and heating equipment, as well as other auxiliary devices.

Many other factors affect the overall energy efficiency of the marine vessel and should be considered in the ship performance including optimization and configuration of the power plant of the ship, choice of fuel type, the trim and list of the ship and the planned route.

A computer software implemented simulation, or a computer software implemented model, is a computer program that is configured to simulate an abstract model of a system. Optimization of ship energy performance, like energy consumption, has been performed by creating such computer-implemented simulation models that describe relationships and dependencies between operational variable factors of the ship and parameters presenting input variables that these factors depend on. The models enable prediction of the behavior of the system from a set of parameters and initial conditions.

The reliability and the trust that can be put in such computer simulations depend on the validity of the simulation model.

Modeling the dependencies between the performance variable and the affecting input variables are complicated and based on empirical methods. Trustworthy model requires deep understanding on both energy production and consumption. Prior art methods require human effort and manual setting of parameters as well as manual system control based on the model output.

The object of this invention is to develop simulation models that give more detailed and reliable information about different factors affecting the ship energy performance and control vessel automation in accurate and efficient way.

In an embodiment, automation, power management and energy management systems are configured to be operated together so that a support tool and scheduler is developed that can either assist the chief engineer in optimizing the use of the on-board systems and schedule the activities for each system or control the board system automatically to support better autonomous marine vessels, for example.

Different operating schedules may be defined, such as basic operation mode, electronic operation mode and automated operation mode, for example. Within the basic operation mode, schedule information can be provided in printed form or electronically to the engine crew and use for scheduling the use of equipment based on energy consumption and generation. Within the electronic operation mode, the schedule information can be provided as embedded into the main systems providing the schedule in electronic format along with a notification prior to every new task to be performed and a request for acknowledge. Within the automated operation mode, the schedule information can be provided embedded into the main systems scheduling and further executing the use of equipment and energy generation with a mere notification to the engine crew or remote-control station.

Currently it is still common that energy management systems and power management systems are operated separate from navigation systems, which requires a manual approach to the operation and management of the systems. Disclosed embodiments are configured to automate the interaction between the navigational route planning and the energy route planning. Such operation may include scheduling of energy consumption (use of equipment) and energy generation along with when to use different types of fuel/propulsion/exhaust gas cleaning system (e.g. SOx or NOx cleaning systems) to comply with local environmental requirements, for example.

By allowing an extended exchange of data between more systems, it makes it possible to create a better optimization and utilization of the on-board systems and it makes the work of the chief engineer easier to plan and perform.

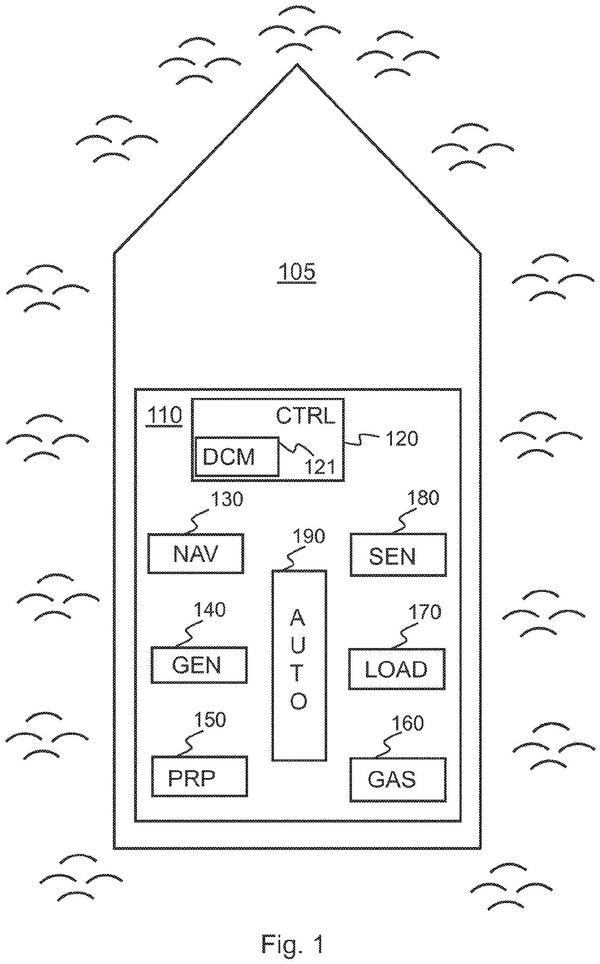

Fig. 1 shows a schematic picture of a marine vessel 105 and a marine vessel system 110 according to an example embodiment.

The marine vessel system 110 comprises a control apparatus 120 configured to provide and operate a dynamic control model (DCM) 121.

When planning a voyage between ports or waypoints, for example, route plan information is determined. The dynamic control model (DCM) 121 is maintained and operated by the control apparatus 120 and receives route plan information for a dedicated route. The route plan information may be generated by the control apparatus 120 or received by the control apparatus 120. The route plan information is generated using information from navigation system 130 that is configured to provide route plan related information based on weather conditions, time schedule, safety aspects and fuel consumption (e.g. based on estimated fuel consumption and weather forecast), for example. As part of the planning steps an estimate of the resources available and possible constraints to the voyage plan are needed as well. Seawater characteristic information associated to the dedicated route may be determined using the route plan information. Furthermore, energy consumption information associated to the dedicated route may be determined using the route plan information. Operational characteristics of a gas solutions system may be determined. The gas solutions system may comprise a heat exchanger sub-system of the marine vessel, wherein the heat exchanger sub-system is configured to use seawater as a cooling medium, an intermediate medium or a heating medium, for example. Furthermore, characteristic information representing at least one operating characteristic of the marine vessel may be received. The dynamic energy management model (DCM) 121 is generated using the route plan information, the seawater characteristic information and the operational characteristics. The route plan information may be adjusted based on the dynamic control model (DCM), the route plan information, the seawater characteristic information and the operational characteristic information, automatically.

In an embodiment, a task may be generated based on the DCM, wherein the task may relate to vessel activities (maintenance of sub-systems, gas solutions, heat exchangers, fresh water production, etc.) based on the route plan, seawater characteristic information and operational characteristics. Weather forecasts may also be used. By establishing an extended interface between the DCM model 121 and other systems like the navigation system 130, automation system 190, power generation system 140, propulsion system 150, gas system 160, energy load system 170 and sensor system 180, for example, it is possible to automate the activities related to planning the energy production and consumption for the voyage and provide an energy voyage plan determining when certain tasks are to be performed and when systems should be ready on standby or switched on/off. The energy voyage plan generated based on the DCM 121 can include schedules for changing from diesel oil to LPG, change of propulsion (electrical vs. combustion in hybrid ships), activating reliquefaction of LPG system, pumping seawater for cooling medium in gas solutions, such as heat exchangers, change of propulsion energy source (e.g. electric motor powering the propulsion wherein the energy source for the energy motor is changed), or for activating the exhaust gas cleaning system (e.g. SOx or NOx cleaning systems), for example. By establishing a DCM 121 for communicating between systems 120-190 it is possible for the on-board systems to negotiate the optimal solution for the voyage. Top priority for optimization may be defined to be safety, and second and third priority can be set by the ship operator (energy efficiency, fuel consumption, speed/time, etc.), for example. The DCM 121 operates as a virtual energy pilot for the voyage. The gas system 160 may be configured to select from at least one of the following energy sources: diesel, liquified natural gas (LNG), liquified petroleum gas (LPG), methanol, low sulfur heavy fuel oil (HFO), marine gas oil (MGO), and hydrogen, for example.

The heat exchangers within the gas system 160 is needed for cooling the condenser to liquefy the boil off vapor.

A heat exchanger is an energy exchange system (in the form of heat) between fluids. In practice, all the thermal duty of the hot fluid is transferred to the cold fluid, thereby fulfilling the energy balance.

The thermal duty of a fluid in liquid state depends on the mass flowrate and the temperature differential between the inlet and outlet sections. In a fluid with a change of phase in saturated conditions (either condensation or evaporation), the heat power depends on the mass flowrate and the enthalpy of the phase change, that is determined by the saturation pressure.

By law of cooling, the rate of change in energy of fluid is proportional to the difference in temperatures between fluid and the corresponding element in the heat exchanger. If seawater is used in the heat exchanger as coolant, the temperature of the pumped seawater affects directly to the additional energy needed for the heat exchange process.

Propulsion system 150 may utilize power source to be selected from at least one of the following: combustion-engine based power source; hybrid power source; and full electric power source.

The DCM 121 solution will allow different levels of automation within vessels. In first operation mode, DCM 121 may be configured to provide an energy voyage plan, which the engineers can use for scheduling their activities. In second operation mode, DCM 121 may be configured to provide an embedded solution, wherein the sub-systems can notify the operator based on the energy voyage plan, when to perform certain tasks or be switched on or set to standby. This notification is repeated on the main display in the engine control room or remote-control station. In third operation mode, DCM 121 may be configured to provide a solution to be fully automated and automatically executing the energy voyage plan of the DCM 121 with merely notification provided to the operator or remote-control station when performing different automated tasks.

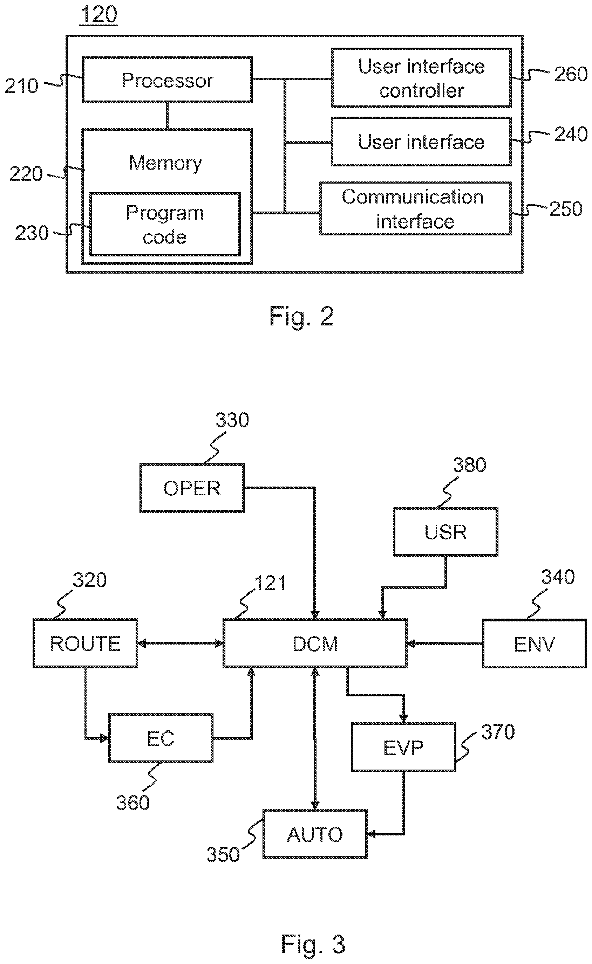

Fig. 2 presents an example block diagram of a control apparatus 120 in which various embodiments of the invention may be applied. The control apparatus 120 is configured to maintain and/or operate the dynamic control model (DCM).

The general structure of the control apparatus 120 comprises a user interface 240, a communication interface 250, a processor 210, and a memory 220 coupled to the processor 210. The control apparatus 120 further comprises software 230 stored in the memory 220 and operable to be loaded into and executed in the processor 210. The software 230 may comprise one or more software modules and can be in the form of a computer program product, such as the DCM 121 of Fig. 1. The control apparatus 120 may further comprise a user interface controller 260.

The processor 210 may be, e.g., a central processing unit (CPU), a microprocessor, a digital signal processor (DSP), a graphics processing unit, or the like. Fig. 2 shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary application, such as computer program code for DCM 121, voyage related data, vessel related data, seawater data, sensor data or environmental data may be stored to the memory 220.

In an embodiment, the apparatus 120 is configured to perform a computer-implemented method for automated route management of a marine vessel, the method comprising: determining route plan information of the marine vessel; determining seawater characteristic information associated with the route plan information; receiving operational characteristics of a heat exchanger sub-system of the marine vessel, wherein the heat exchanger sub-system is configured to use seawater as a cooling medium; generating dynamic control model using the route plan information, the seawater characteristic information and the operational characteristics; and adjusting the route plan information based on the dynamic control model. An automation element of the marine vessel may be controlled automatically based on a task generated based on the dynamic control model (DCM) model.

The user interface controller 260 or the user interface 240 may comprise circuitry for receiving input from a user of the control apparatus 120 (an operator), e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as universal serial bus (USB) or National Marine Electronics Association (NMEA) 0183/2000 standard for example. The communication interface module 250 may be integrated into the control apparatus 120, or into an adapter, card or the like that may be inserted into a suitable slot or port of the control apparatus 120. The communication interface module 250 may support one radio interface technology or a plurality of technologies. The control apparatus 120 may comprise a plurality of communication interface modules 250.

A skilled person appreciates that in addition to the elements shown in Fig. 2, the control apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control apparatus 120 may comprise a disposable or rechargeable battery (not shown) for powering when external power if external power supply is not available.

In an embodiment, the control apparatus 120 comprises speech recognition means. Using these means, a pre-defined phrase may be recognized from the speech and translated into control information for the apparatus 120, for example.

External devices or sub-systems (e.g. elements 130-190 of Fig. 1) may be connected to the control apparatus 120 using communication interface 250 of the apparatus 120 or using a direct connection to the internal bus of the apparatus 120.

Fig. 3 shows a schematic picture of a dynamic control model (DCM) 121 and related information flows according to an example embodiment.

Elements 320-380 may have alternative ways to connect with each other and Fig. 3 only shows one example embodiment. Furthermore, only connections that relate somehow to dynamic control model (DCM) 121 are illustrated. For example, environmental information 340 is also used for route planning and thus for the route plan information 320 but direct connection between blocks 320 and 340 is not shown for simplifying the Fig. 3.

The dynamic control model (DCM) 121 can be configured to operate as a stand-alone solution or as an integrated part of the energy management system/voyage management system/power management system of the marine vessel. The dynamic control model (DCM) 121 enables automation of the LPG gas solution process, energy production and consumption, and further enables a higher degree of autonomous operation on board conventional marine vessels and paves the way for energy management for autonomous marine vessels.

In an embodiment, the dynamic control model (DCM) 121 is interfaced with the navigation system, automation system, power management system and sub-systems like gas solutions, heat exchangers, engines and generators, as shown in Fig. 1, for example. The dynamic control model (DCM)) 121 may further be configured to receive and manage information about the health status of sub-systems directly or through the power management and automation systems. The dynamic control model (DCM) 121 can generate tasks and/or instructions for the automation and power management systems based on route plan information, seawater characteristic information and operational characteristics of the marine vessel.

The dynamic control model (DCM) 121 is arranged to receive route plan information 320 including information like weather forecasts, navigation information for the dedicated route, waypoint information for the dedicated route, emission restricted areas, environmental restrictions and other relevant information. The route plan information 320 may be received from the navigation system of the marine vessel system or the route plan information 320 may be generated by the control apparatus 120. The route plan information 320 may comprise at least one of the following: navigation information; and environmental information. The navigation information may comprise at least one of the following: destination information of the dedicated route; remaining travel time of the dedicated route; remaining distance of the dedicated route; navigation information for the dedicated route; waypoint information for the dedicated route; emission restricted area information of the dedicated route; and environmental restriction information of the dedicated route.

Energy consumption information 360 associated to the dedicated route may be determined using the route plan information 320. The energy consumption information 360 relates to predicted energy consumption of at least one of the following: gas solutions of the marine vessel, heat exchanger sub-system of the marine vessel, hotel load of the marine vessel, at least one propulsion device of the marine vessel, and automation system of the marine vessel. The hotel load may represent load relating to at least one of lighting, heating, ventilation and fresh water generation during the dedicated voyage. Thus, hotel load may relate to any electrical load caused by all systems on a vehicle (especially a marine vessel) other than propulsion. Energy consumption information 360 may comprise planned energy consumption in relation to different tasks and health status information and availability of the vessel systems during the voyage and used as an input for the dynamic control model (DCM) 121.

In case there are constraints in the access to power or a mismatch between production and consumption of energy (consumption exceeds the possible production), the dynamic control model (DCM) 121 will generate dynamic change proposals to the route plan information 320 made by the navigation system, for example. The energy consumption information 360 is received by the dynamic control model (DCM) 121.

In an embodiment, the dynamic control model (DCM) 121 may be configured to automate interaction between navigational route planning and energy route planning. Such operation may include scheduling of energy consumption (use of equipment) and energy generation.

In an embodiment, the control apparatus 120 may be configured to determine a task relating to the route plan information 320 automatically based on the dynamic control model (DCM) 121. Thus, the route plan information 320 that is determined for a dedicated route, may be dynamically adjusted automatically using the dynamic control model (DCM) 121.

In an embodiment, the control apparatus 120 may be configured to dynamically adjust navigation information of the route plan information. Furthermore, the control apparatus 120 may be configured to dynamically adjust navigation information for the dedicated route, and, for example, dynamically adjusting waypoint information for the dedicated route. For example, the route with optimal predicted energy consumption corresponds to the route with lowest energy consumption.

In an embodiment, the control apparatus 120 may be configured to dynamically adjust destination information or remaining travel time of the dedicated route.

The energy consumption information 360 may be configured to be defined using also other input information than only the route plan information 320. For example, characteristics information 330, environmental information 340 or operator input 380 may be used together with the route plan information 320.

The dynamic control model (DCM) 121 is further arranged to receive characteristic information 330 representing at least one operating characteristic of the marine vessel. The operating characteristic information 330 of the marine vessel may comprise at least one of the following: information about used medium of a heat exchanger sub-system; operation mode of the heat exchanger sub-system; operation status of the heat exchanger sub-system; information on currently active propulsion system; status information of energy generation sub-system; and status information of energy storage sub-system, such as a battery system.

The dynamic control model (DCM) 121 may further be arranged to receive environmental information 340 separate or in addition to possible environmental information included in the route plan information 320. The environmental information 340 may represent at least one current environmental characteristic of the marine vessel, such as seawater characteristic information, weather information; wind information; air pressure information; ice information; wave height, frequency or direction information; tidal data; current information; and roll or pitch information. The seawater characteristic information may comprise at least one of the following: seawater temperature information; and seawater salinity information..

In an embodiment, the control apparatus 120 is configured to schedule gas solutions related operations, such as reliquefaction process using seawater as coolant in heat exchangers, energy consumption operations or energy generation operations using a determined task relating the route plan information automatically based on the dynamic control model (DCM) 121. The scheduling may be based on the dynamic control model (DCM) 121 generated using at least one of the following: seawater temperature information, emission restricted area information of the dedicated route; and environmental restriction information of the dedicated route.

In an embodiment, if there has not been identified any violations of possible constraints, the dynamic control model (DCM) 121 may generate at least one task for controlling an automation element of the automation system 350 within the marine vessel automatically based on the dynamic control model (DCM) 121 and control the associated automation element of the marine vessel automation system 350 based on the determined task.

In an embodiment, the automation element of the marine vessel automation system 350 is configured to control at least one of the following: route planning system for next waypoint or port, gas solution system, such as LPG reliquefaction system, voyage management system for optimizing the optimal speed profile.

For example, the route planning system may carry out following procedures: A) Calculate and balance to what degree a route deviation to colder water will benefit the overall economy. B) Generate an operational plan for when to run the LPG processing system (such as reliquefaction) during the planned route. C) If the preferred port arrival time is known, calculate the optimal speed profile including staying longer in cold waters and avoiding waiting time in warm waters. Additionally, the system may collect real operating data, compare it with the original DCM prediction/recommendation, and automatically improve the recommendation for later voyages operated by DCM 121.

In an embodiment, the automation 350 of the marine vessel automation system 350 may further be configured to control at least one of the following: power management system of the marine vessel and navigation system of the marine vessel. The automation element may be configured to control, for example, power management system of the marine vessel for at least one of the following: schedule for changing propulsion power source; schedule for changing used fuel; schedule for activating exhaust gas cleaning system (e.g. SOx or NOx cleaning systems); and schedule for operating HVAC (Heating, Ventilation and Air Conditioning). The automation element may also be configured to control, for example, power management system of the marine vessel for schedule for changing operating modes of combustion engine(s) or other power sources (in so far, these operating modes influence efficiency of the power generation, for example).

In an embodiment, a control apparatus 120 processing the dynamic control model (DCM) 121 is configured to receive confirmation of the task being performed from an automation element 350 being controlled by the task, and to update the dynamic control model (DCM) 121 based on the route plan information, the seawater characteristic information and the operational characteristics in response to the received confirmation.

In an embodiment, if there has not been identified any violations of possible constraints, the dynamic control model (DCM) 121 may generate energy voyage plan (EVP) 370 and utilize the energy voyage plan (EVP) 370 for determining control tasks relating to gas solutions systems, energy production, energy consumption or energy storage within the marine vessel automatically based on the dynamic control model (DCM).

While cruising and performing transit during the voyage, the dynamic control model (DCM) 121 maintains a dynamic and up-to-date situational awareness in relation to the executed route (navigation) and energy route plan and the continued health status from all energy consumers and producers. If the situation changes and a system changes health status, the dynamic control model (DCM) 121 may be configured to update the energy voyage plan 370 including tasks and automatically notifying the navigation system to allow the navigation system to modify the route plan information accordingly.

Because the dynamic control model (DCM) 121 has access to information about optimal operation conditions of the sub-systems, the model can help to avoid stressing engines, generators and other subsystems, as the safety limit parameters are known to the dynamic control model (DCM) 121. An operating mode may be used wherein only confirmed request from the operator is needed, and the dynamic control model (DCM) 121 may allow running sub-systems outside the optimal operation conditions.

The energy voyage plan 370 information can be provided in a first mode as a schedule made available to the engineers to follow. The engineers may perform the scheduled tasks for the automation system 350 based on the energy voyage plan 370. In a second mode, the energy voyage plan 370 may be embedded in the main display of the engine control room and the power management system, for example. The automation system may be further configured to provide an integrated guidance tool to prompt the operator when a task should take place and by acknowledgement from the operator enable and perform the task and end the task when performed. A third mode allows a fully automated solution, where the operator may only be informed about the energy voyage plan 370 or the tasks determined by the dynamic control model (DCM) 121. Optionally, current status of the model and next steps may be informed to the operator but the dynamic control model (DCM) 121 is configured to control automation elements automatically. In such embodiment the energy voyage plan 370 may be optional.

It is possible to override the dynamic control model (DCM) 121 by changing it to standby mode and allowing a manual operation of the power management and automation systems and the sub-systems. At the third mode, the dynamic control model (DCM) 121 can operate autonomously together with the navigation system and all the sub-systems. Instead of notifying the operator, the dynamic control model (DCM) 121 may log (e.g. using the energy voyage plan 370) the activities and events and will only request assistance from the mission controller or a human operator in case the dynamic control model (DCM) 121 is facing a situation it cannot handle or it is not available for operation.

In an embodiment, the energy voyage plan 370 may also comprise automatic information being sent to port authority system for approaching arrival. The information being sent may relate to, for example, estimate of LPG, water, power and/or energy required while staying at berth. By doing that the harbor authorities can make a better estimate how much LPG, water and electricity they need to buy on the spot market for the vessel about to be docked. The port information system may have a dynamic control model (DCM)of its own that receives inputs from all vessels arriving to the port.

The dynamic control model (DCM) 121 is configured to control sub-systems and fuel operations via the automation and power management systems and the dynamic control model (DCM) 121 can e.g. automatically negotiate the planned route with the navigation system based on the availability of energy producers and their health status (able to operate 0-100%), gas solutions sub-systems, seawater characteristics, and the planned energy consumption in relation to ship operation, time and ship position, for example.

In an embodiment, the dynamic control model (DCM) 121 is configured to receive input from an operator (USR) 380 either on-board the vessel or remote at other vessel or ground station, for example. In certain pre-defined operating modes or tasks, it may be required that operator acknowledgement is received from the operator (USR) 380 for the determined task the dynamic control model (DCM) 121 before controlling an automation element of the marine vessel based on the determined task in response to the received operator acknowledgement.

In an embodiment, the dynamic control model (DCM) 121 may be updated in real-time using the route plan information 320, the seawater characteristic information 340 and the operational characteristics 330. In an embodiment, when receiving confirmation from the operator 380 of the task being performed, the dynamic control model (DCM) 121 is updated in response to the received confirmation.

In an embodiment, in autonomous vessel operation mode, automatic route planning may be executed to provide the route plan information 320 for a safe and optimized route taking into account planned destination and ETA, up to date chart data from the ECDIS, draft of the vessel, predicted environmental conditions (ocean current, wind and sea state) as well as status information's from the power and propulsion plant. Furthermore, a contingency plan to stop the vessel safely in case of emergency is generated along the route for every leg or even leg segment, for example. The approval mechanisms of the route plan 320 may vary depending on autonomy level in use, authority rule sets and customer specifications. Once the route plan is activated and being executed by the Integrated Navigation / DP System (Trackpilot, Speedpilot, DP), the control system is permanently monitoring and adapting the route execution with regards to track- and schedule keeping) if necessary. Reasons for adaptation can be, for example: new destination and/or new ETA, differences between predicted and real environmental conditions, collision avoidance maneuvers, and unexpected changes in the propulsion / power plant (i.e. unforeseen equipment failure).

In an embodiment, the route plan information 320 comprises at least one of the following: navigation information for a waypoint or a port; target time or arrival information for the waypoint or the port; and environmental information associated to at least one route of the route plan information.

In an embodiment, efficiency of heat exchangers for reliquefaction of LPG system using seawater as coolant is greatly improved if planning the used route between ports or waypoints. That would result with overall energy savings no matter the travelled route might slightly increase. When knowing weather forecasts, sea temperatures at different areas as well as some vessel operational parameters relating to gas solutions of the vessel, a computer implemented SW algorithm or model is provided that optimizes both the used route as well as optimal times/places to carry out pumping of seawater for heat exchanger use, for example. The route information or target information may also comprise some port information, like time slot for allocated berth. Thus, the available time to spend to wait for available berth could be optimized so that either route for the port or stand-by position for waiting the open slot could be optimized based on sea water characteristics. Not only seawater temperature may be used, but also other parameters like salinity level, water quality etc. can be used if affecting the efficiency of LPG process. Furthermore, based on the DCM 121 energy consumption information may be determined.

In an embodiment, an operational plan 370 may be determined comprising tasks to control at least one of the following: time and location to run gas solution system related processes along a route of the route plan information; and time and location to run heat exchanger sub-system related processes along a route of the route plan information.

In an embodiment, the dynamic control model 121 may determine arrival time for a waypoint based on the route plan information; optimal speed profile for the marine vessel to stay longer in colder waters and avoiding waiting time in warmer waters; and adjusting the route plan information 320 using the optimal speed profile.

Furthermore, the DCM 121 may be configured for receiving actual operating data; comparing the actual operating data with predicted data generated by the dynamic control model to provide error data; and adjusting the dynamic control model based on the error data.

In an embodiment, the dynamic control model 121 may be updated in real-time based on the route plan information, the energy consumption information and the characteristic information. Scheduling of energy consumption or energy generation relating the route plan information may be automatically arranged based on the dynamic control model 121. The scheduling may be based on the dynamic control model generated using at least one of the following: emission restricted area information of a dedicated route; and environmental restriction information of a dedicated route.

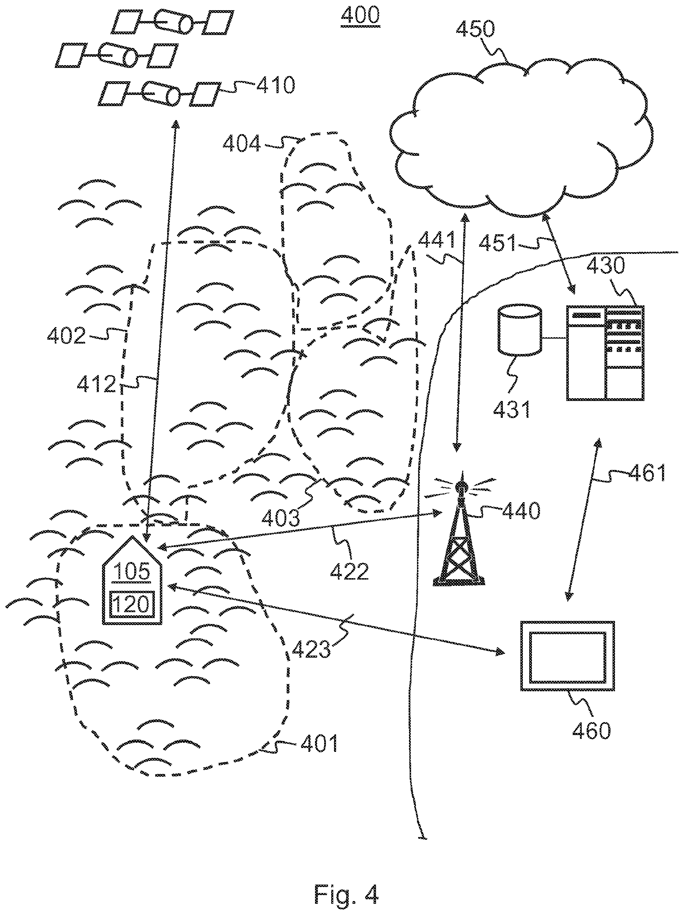

Fig. 4 shows a schematic picture of a system 400 according to an example embodiment. A marine vessel 105 comprises a control apparatus 120 for controlling automated route management of the marine vessel.

The control apparatus 120 is capable of downloading and locally executing software program code. The software program code may be a client application of a service whose possible server application is running on a server apparatus 430, 431 of the system 400. The control apparatus 120 may comprise a capturing device, such a sensor device, for providing vessel related signals and data. The sensor device may comprise an accelerometer, an inclinometer, a gyroscope, a wind sensor, a positioning sensor, a temperature sensor, a pressure sensor, or a camera, for example. The camera may also be used to provide video data and a microphone may be used for providing audio data, for example. The sensor device may also provide environmental signals and data.

In an embodiment, the marine vessel control apparatus 120 is configured to determine route plan information of the marine vessel 105; determine seawater characteristic information associated with the route plan information; receive operational characteristics of a heat exchanger sub-system of the marine vessel, wherein the heat exchanger sub-system is configured to use seawater as a cooling medium; generate dynamic control model using the route plan information, the seawater characteristic information and the operational characteristics; and adjust the route plan information based on the dynamic control model. Between ports, the marine vessel is able to follow routes using an autonomous, semi-autonomous, remote controlled or manual maneuvering control. Furthermore, different DCM operating modes may be automatically selected depending on the voyage progress.

Seawater temperature changes depending on different areas and time. The temperature of the ocean, especially the surface, varies from place to place and from season to season. Ocean temperature depends on the amount of solar energy absorbed. The amount of sunlight that hits the temperate regions (between the tropics and the poles) varies between summer and winter. The variation in solar energy absorbed means that the ocean surface can vary in temperature from a warm 30°C in the tropics to a very cold -2°C near the poles.

Seawater temperature changes diurnally, like the air above it, but to a lesser degree. There is less seawater temperature variation on breezy days than on calm days. In addition, ocean currents such as the Atlantic Multidecadal Oscillation (AMO), can affect seawater temperature on multi-decadal time scales, a major impact results from the global thermohaline circulation, which affects average seawater temperature significantly throughout most of the world's oceans.

Coastal seawater temperature can cause offshore winds to generate upwelling, which can significantly cool or warm nearby landmasses, but shallower waters over a continental shelf are often warmer. Onshore winds can cause a considerable warm-up even in areas where upwelling is fairly constant, such as the northwest coast of South America.

In an embodiment, between waypoints or ports, the marine vessel 105 may choose different routes over sea and depending on the route there may be a plurality of areas or regions 401-404 with different seawater temperatures. The marine vessel 105 route may be optimized using the dynamic control model (DCM) so that the vessel 105 stays longer periods on areas 401-404 with cooler seawater to improve energy efficiency for LPG reliquefaction process, for example. Cooler water used in heat exchangers improve the efficiency. The vessel 105 may even park and wait on cooler areas 401-404 if there is no free berth slot in next port.

In an embodiment, the control apparatus 120 may be operated in an autonomous mode, wherein the control apparatus 120 operates the DCM model to autonomously control the marine vessel 105 to follow and execute precise energy plan on the voyage between ports.

The transit operation between ports and the automated energy management operation may be performed using separate control modes. Alternatively, they may be combined as a single mode.

In the present description, by marine vessel are meant any kinds of waterborne vessels, typically marine vessels. Most typically the marine vessel is a ferry, a cargo ship or large cruise vessel operating with LPG, but the present disclosure is also applicable for yachts, for example.

The control apparatus 120 is configured to be connectable to a public network 450, such as Internet, directly via local connection or via a wireless communication network 440 over a wireless connection 422. The wireless connection 422 may comprise a mobile cellular network, a satellite network or a wireless local area network (WLAN), for example. The wireless communication network 440 may be connected to a public data communication network 450, for example the Internet, over a data connection 441. The apparatus 120 may be configured to be connectable to the public data communication network 450, for example the Internet, directly over a data connection that may comprise a fixed or wireless mobile broadband access. The wireless communication network 440 may be connected to a server apparatus 430 of the system 400, over a data connection.

In an embodiment, the control apparatus 120 may set up local connections within the marine vessel system 110 with at least one capturing device and at least one automation device. The capturing device, such as a sensor, may be integrated to the apparatus 120, attached to the hull of the vessel and connected to the vessel control system or arranged as separate sensor device and connectable to the network 450 over separate connection.

The apparatus 120 and its client application may be configured to log into a vessel data service run on a server 430, for example. The server apparatus 430, 431 may be used to maintain any data, such as receiving route plan information of the marine vessel for the dedicated route, seawater characteristics such as temperature, energy consumption information associated to the dedicated route, characteristic information representing at least one operating characteristic of the marine vessel such as LPG system's heat exchangers, dynamic energy management model related data, or task related information, for example.

In an embodiment, real-time interaction may be provided between the apparatus 120 and the server 430 to collaborate for dynamic energy management model related data over a network 450. Real-time interaction may also be provided between the apparatus 120 and the remote user device 460 to collaborate for any DCM related data over a network 450, 461.

The apparatus 120 may be connected to a plurality of different capturing devices and instruments and the apparatus 120 may be configured to select which sensor devices is actively collaborated with.

A user/operator of the apparatus 120 or the remote user device 460 may need to be logged in with user credentials to a chosen service of the network server 130.

In an embodiment, the system 100 comprises a sensor device configured to be comprised by or connectable to the apparatus 120 over a local connection. The local connection may comprise a wired connection or a wireless connection. The wired interface may comprise such as universal serial bus (USB), National Marine Electronics Association (NMEA) 0183/2000 standard, or ethernet based protocols for example NMEA IEC61162-450 standard for example. The wireless connection may comprise acoustic connection, Bluetooth^{™}, Radio Frequency Identification (RF-ID) or wireless local area network (WLAN), for example. Near field communication (NFC) may also be used for sensor device identification between the sensor device and the apparatus 120, for example.

In an embodiment, the system 100 may comprise a server apparatus 430, which comprises a storage device 431 for storing service data, service metrics and subscriber information, over data connection 451. The service data may comprise dynamic control model (DCM) related data, voyage related data, seawater characteristics, waypoint properties related data, vessel related data, environmental data, navigation information, configuration data, energy consumption related data, energy production related data, characteristics information for the marine vessel, task information for the automation system, sensor data, user input data, real-time collaboration data, predefined settings, and attribute data, for example.

In an embodiment, configuration information or application download information for any apparatus may be automatically downloaded and configured by the server 430. Thus, the user of the devices may not need to do any initialization or configuration for the service. The system server 430 may also take care of account creation process for the service, such sensor devices, apparatuses and users. Timing of the download may also be configured to be automatic and optimized in view of the vessel travel plan. For example, download may be automatically taking place when the vessel is docked at harbor.

In an embodiment, the association of the devices can be one-time or stored persistently on any of the devices or the server 430.

In an embodiment, authentication of a sensor device or apparatus 120 on a system server 430 may utilize hardware or SIM credentials, such as International Mobile Equipment Identity (IMEI) or International Mobile Subscriber Identity (IMSI). The sensor device or apparatus 120 may transmit authentication information comprising IMEI and/or IMSI, for example, to the system server 430. The system server 430 authenticates the device by comparing the received authentication information to authentication information of registered users / devices / vessels / apparatuses stored at the system server database 431, for example. Such authentication information may be used for pairing the devices and/or apparatuses to generate association between them for a vessel data connection.

In an embodiment, a service web application may be used for configuration of a system. The service web application may be run on any user device, admin device, or a remote-control device 460, such as a personal computer connected to a public data network, such as Internet 450, for example. The control apparatus 460 may also be connected locally to the apparatus 120 over a local connection 423 and may utilize the network connections of the apparatus 120 for configuration purposes. The service web application of the control apparatus may provide searching/adding instruments, determining attributes, device setup and configuration, for example. The service web application of the control apparatus 460 may be a general configuration tool for tasks being too complex to be performed on the user interface of the apparatus 120, for example.

In an embodiment, a remote-control apparatus 460 may be authenticated and configuration data sent from the control apparatus 460 to the system server 430, 431, wherein configuration settings may be modified based on the received data. In an embodiment, the modified settings may then be sent to the apparatus 120 over the network 450 and the local connection or the wireless operator. The modified settings may also be sent to external devices correspondingly, through the apparatus 120 or directly over the network 450, for example.

In an embodiment, the sensor device may be wireless or wired.

The system 400 may also comprise a plurality of satellites 410 in orbit about the Earth. The orbit of each satellite 410 is not necessarily synchronous with the orbits of other satellites and, in fact, is likely asynchronous. A global positioning system receiver apparatus such as the ones described in connection with preferred embodiments of the present invention is shown receiving spread spectrum Global Navigation Satellite System global positioning system (GNSS) satellite signals 412 from the various satellites 410.

The remote-control apparatus 460 may be configured to be operated by a remote operator of the marine vessel system 110. The remote-control apparatus 460 may be arranged on a ground station, on the vessel or on another vessel, for example.

In an embodiment, precondition for an automatic route planning is the availability and the meaningful incorporation of all relevant data for an intended voyage. At least the following items must be considered: 1) the condition and state of the vessel, its stability, any operational limitations; its permissible draught at sea in fairways and in ports; its maneuvering data, including any restrictions; 2) up-to-date ECDIS charts to be used for the intended voyage, as well as any relevant permanent or temporary notices to mariners and existing radio navigational warnings; 3) seawater characteristics, climatological, hydrographical, and oceanographic data as well as other appropriate meteorological information; 4) existing ships' routing and reporting systems, vessel traffic services, and marine environmental protection measures; 5) status of gas (e.g. LPG) power plant, in particular the reliquefaction sub-system, maximum available propulsion power over the time of executing the voyage, energy consumption information associated with the voyage; and 6) volume of traffic likely to be encountered throughout the voyage.

The input for an automatic route plan may come from a Remote Control Centre (RCC), the Remote Operation Centre (ROC) or the Fleet Operation Centre (FOC), depending on the level of autonomy. A mission manager process may receive the order and provide it to the route planning and execution process of the apparatus 120. The mission order contains at least destination port and planned arrival time. Additional parameters i.e. driven by cargo (avoiding of areas with predicted sea state above a certain level) can be part of it. Based on input from 1) and 2) above and defined safety precautions / margins (i.e. safety corridor) an automatic routing algorithm will find in the first instance a geometrically optimal route from A to B. Geometric adaptations as well as the generation of the schedule by means of considering information's from 3), 5) and 6) will be performed by an optimization engine afterwards.

In an embodiment, the voyage plan (e.g. information 320 in Fig. 3) finally consists of the following information: waypoint sequence incl. planned radius from berth to berth; route corridor around the route; additional information for harbor and docking maneuvering with regards to pivot points, max. speed per leg (speed limits) as well as planned trajectory of planned RPM (rotational speed), planned schedule (arrival) at every waypoint, an energy optimization plan for each leg (e.g. save "parking" position or area for optimal seawater temperature), and required reporting points which have to trigger a system performing automatic reporting. After approval of the voyage plan (depending on the autonomy level to be carried out by RCC, ROC or FOC) the voyage plan may be made public for the fleet as well as for public use, e.g. a maritime cloud.

After activation of the planned route the relevant subsystems of the control apparatus 120 (Track Control, Speed Control and DP) will perform the automatic route execution. In case relevant changes of input data described under 3) and 5), new planned arrival time or extensive collision avoidance maneuvers apply, a recalculation of the route (geometry) and schedule (rpm trajectory) will be triggered. The adapted voyage plan will be reported as described and the adapted route will be executed. The route planning and execution system should provide permanent input for the Electronic Logbook. Beside logging of standard navigation data, the active voyage plan as well as deviations from route and schedule must be logged at least. Furthermore, all reasons for voyage plan adaptation need to be recorded. During passing of defined reporting points of a voyage an internal reporting system will be triggered.

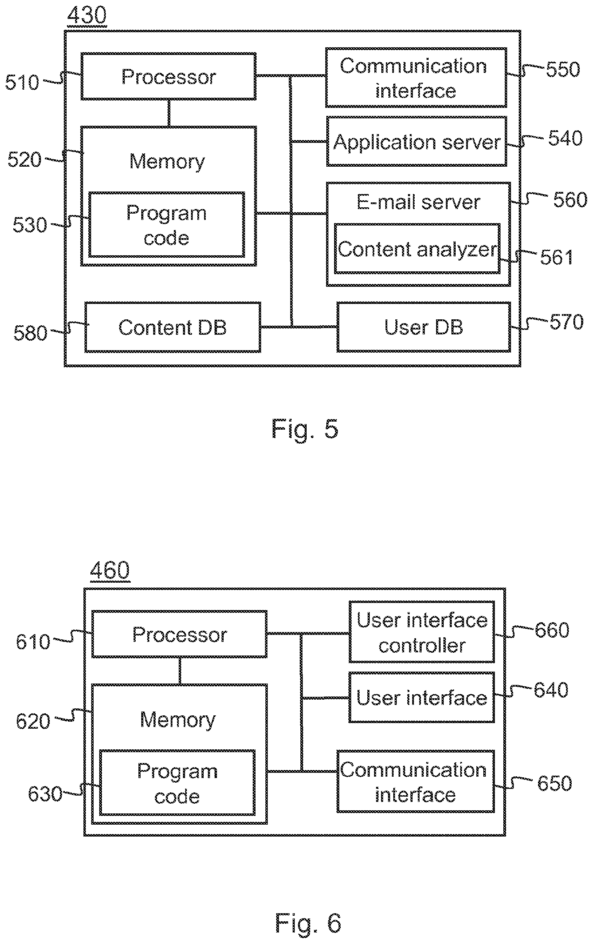

Fig. 5 presents an example block diagram of a server apparatus 130 in which various embodiments of the invention may be applied.

The general structure of the server apparatus 130 comprises a processor 510, and a memory 520 coupled to the processor 510. The server apparatus 130 further comprises software 530 stored in the memory 520 and operable to be loaded into and executed in the processor 510. The software 530 may comprise one or more software modules and can be in the form of a computer program product.

The processor 510 may be, e.g., a central processing unit (CPU), a microprocessor, a digital signal processor (DSP), a graphics processing unit, or the like. Fig. 5 shows one processor 510, but the server apparatus 130 may comprise a plurality of processors.

The memory 520 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 130 may comprise a plurality of memories. The memory 520 may be constructed as a part of the server apparatus 130 or it may be inserted into a slot, port, or the like of the server apparatus 130 by a user. The memory 520 may serve the sole purpose of storing data, or it may be constructed as a part of an apparatus serving other purposes, such as processing data.

The communication interface module 550 implements at least part of radio transmission. The communication interface module 550 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as universal serial bus (USB) or National Marine Electronics Association (NMEA) 0183/2000 standard for example. The communication interface module 550 may be integrated into the server apparatus 130, or into an adapter, card or the like that may be inserted into a suitable slot or port of the server apparatus 130. The communication interface module 550 may support one radio interface technology or a plurality of technologies. Captured or generated dynamic control model (DCM) related data, voyage data, seawater characteristics data, vessel characteristics data or environmental data, for example, may be received by the server apparatus 130 using the communication interface 550. Data may be stored for backup or processed and provided to a control apparatus 120. The data may be utilized for dynamic control model (DCM) of another marine vessel, for example.

The e-mail server process 560, which receives e-mail messages sent from control apparatuses 120 and computer apparatuses 460 via the network 450. The server 560 may comprise a content analyzer module 561, which checks if the content of the received message meets the criteria that are set for new activity data item of the service. The content analyzer module 561 may for example check whether the e-mail message contains a valid vessel activity data item to be used for dynamic control model (DCM) processing, for example. The valid data item received by the e-mail server is then sent to an application server 540, which provides application services e.g. relating to the user accounts stored in a user database 570 and content of the content management service. Content provided by the service system 100 is stored in a content database 580.

A skilled person appreciates that in addition to the elements shown in Fig. 5, the server apparatus 130 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

Fig. 6 presents an example block diagram of a computer apparatus 460 in which various embodiments of the invention may be applied. The computer apparatus 460 may be a user equipment (UE), user device or apparatus, such as a mobile terminal, a smart phone, a laptop computer, a desktop computer or other communication device.

The general structure of the computer apparatus 460 comprises a user interface 640, a communication interface 650, a processor 610, and a memory 620 coupled to the processor 610. The computer apparatus 460 further comprises software 630 stored in the memory 620 and operable to be loaded into and executed in the processor 610. The software 630 may comprise one or more software modules and can be in the form of a computer program product. The computer apparatus 460 may further comprise a user interface controller 660.

The processor 610 may be, e.g., a central processing unit (CPU), a microprocessor, a digital signal processor (DSP), a graphics processing unit, or the like. Fig. 6 shows one processor 610, but the computer apparatus 460 may comprise a plurality of processors. Corresponding elements of the apparatus 460 is discussed in relation to control apparatus 120.

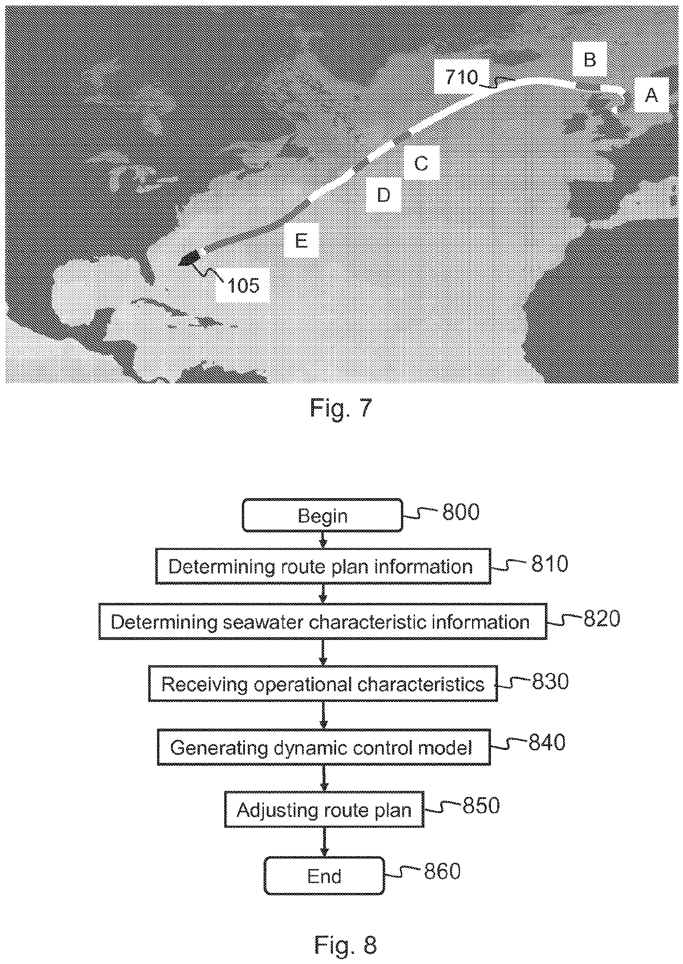

Fig. 7 shows a schematic diagram showing a journey of an LPG operated marine vessel from UK to US in accordance with an example embodiment of the invention.

In an embodiment, the marine vessel 105 is configured to be operated with LPG, wherein the LPG system comprises an LPG reliquefaction plant.

As known, LPG stored and transported at temperatures below ambient releases continuously a certain amount of vapor. The normal manner of maintaining the pressure in the cargo tanks is to extract the released vapor, then being liquefied and returned back to the cargo tanks as condensate. Hereinafter, condensate is to be understood as liquefied vapor whereas vapor is meant to be the product of vapors consisting of vapors generated by heat input to the LPG and any vapor generated when the condensate is returned.

In a refrigeration cycle, the refrigerant circulates from the evaporator through the compressor to the condenser and back to the evaporator. In the evaporator, the heat added to the refrigerant by boiling off is taken from the surroundings. In the compressor an additional amount of heat is conveyed to the refrigerant by the compression process. In the condenser, the total heat is then removed from the refrigerant. The cargo tanks may act as evaporators and the cargo as refrigerant and the seawater is the coolant for the condenser. The reliquefaction unit may be built up around the cargo compressor; where the compressor is used to compress cargo boil off vapor to sufficient pressure to be liquefied against seawater.

The vessel 105 follows a route (white line) 710 and during the voyage, active reliquefaction operations of the LPG system are illustrated with marks A-E (darkened parts of the route). The darker the sea color in Fig. 7, the colder the sea water temperature is.

As can be seen, there are short periods of reliquefaction A-D over the early parts of the route 710, while the vessel 105 cruises in colder sea waters. Then again, immediately after the vessel 105 enters warmer waters of the route 710, a longer period of reliquefaction E starts.

To illustrate an exemplary energy consumption (MWh) of the reliquefaction process over the route 710 regarding different periods of reliquefaction A-E, following data gives some outline:

**Table 1**

| Estimated Energy Consumption (MWh) | | |
|---|---|---|
| | Cargo Compressor | Refrigerant Compressor |
| A | 10 | 7 |
| B | 6 | 4 |
| C | 4 | 4 |
| D | 6 | 2 |
| E | 60 | 47 |
| **TOTAL** | **86** | **64** |

As can be seen form Table 1, the energy consumption for compressors only is heavily linked with reliquefaction over area E of route 710 when in warmer waters.

According to embodiments disclosed, the dynamic control model (DCM) is configured to 1) optimize the route 710 so that the vessel 105 travels via colder areas, where reliquefaction is not needed so much (see route 710 and areas A-D in Fig. 7); 2) optimize vessel speed during the route 710 so that slower speed or even parking is arranged in colder areas if possible; and 3) predict the route 710 properties ahead and carry out optimal operations in advance while at optimum areas of seawater temperatures, such as pre-cooling the condenser, to improve the overall energy efficiency. The DCM may be configured to activate pre-cooling of the condenser well before entering the warmer waters and shorten the period E needed for reliquefaction over the warmer waters.

It is to a large extent LPG-vessels 105 that will benefit from the dynamic control model (DCM), as they are much more dependent on the seawater temperature. In LNG vessels there are refrigerant cooling system that cools the LNG. Such plants are designed not to benefit from lower seawater temperatures. Whereas LPG reliquefaction on the other hand, works by compressing the boiloff itself up to a pressure where the condensation temperature becomes higher/warmer than the current seawater temperature. If the sea water temperature is low, then the required compressor delivery pressure is lower, and significant energy saving may be obtained. The higher the pressure, the higher the condensation temperature will be, and the system works only if the condensation temperature is higher than the surroundings (seawater).

Furthermore, LNG reliquefaction runs continuously due to the high boil off rate (due to the -160 degree temperature), as opposed to LPG that runs only intermittently. This intermittent operation has been typically determined by the crew on a manual basis but according to embodiments disclosed, the control can be optimized and automated by the dynamic control model (DCM) as well as optimizing the route 710 and speed profile over the route for the marine vessel 105.

Fig. 8 shows a flow diagram showing operations in accordance with an example embodiment of the invention.

In step 800, the computer-implemented method for automated route management of a marine vessel, is started. In step 810, route plan information of the marine vessel is determined. In step 820, seawater characteristic information associated with the route plan information is determined. In step 830, operational characteristics of a heat exchanger sub-system of the marine vessel is received, wherein the heat exchanger sub-system is configured to use seawater as a cooling medium. In step 840, dynamic control model is generated using the route plan information, the seawater characteristic information and the operational characteristics. In step 850, the route plan information is adjusted based on the dynamic control model. The method is ended in step 860.

Without in any way limiting the scope, interpretation, or application of the claims appearing below, a technical effect of one or more of the example embodiments disclosed herein is improved method and apparatus for automated marine vessel energy management. Another technical effect of one or more of the example embodiments disclosed herein is improved method and apparatus for autonomous marine vessel control.

Another technical effect of one or more of the example embodiments disclosed herein is that it enables performing the marine vessel energy production/consumption or energy storage related tasks automatically in the safest and most efficient way possible. Optionally, while the operator may have oversight, the DCM model based automation may be principally handled by software in autonomous mode.

Another technical effect of one or more of the example embodiments disclosed herein is that safety is improved since there is less likelihood of human error, less wear and tear since the energy management related devices and systems are efficiently utilized, and greater efficiency that allows reduced operating costs.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. Computer-implemented method for automated route management of a marine vessel (105), the method comprising:
determining (810) route plan information (320) of the marine vessel (105);
determining (820) seawater characteristic information associated with the route plan information (320);
receiving (830) operational characteristics of a heat exchanger sub-system of a gas solution system installed on the marine vessel (105), wherein the heat exchanger sub-system is configured to use seawater as a cooling medium;
generating (840) a dynamic control model (121) using the route plan information (320), the seawater characteristic information and the operational characteristics; and
adjusting (850) the route plan information (320) based on the dynamic control model (121).

2. The method of claim 1, wherein the seawater characteristic information comprises at least one of the following:
seawater temperature information; and
seawater salinity information.

3. The method of claim 1 or 2, wherein the heat exchanger sub-system is operationally connected to an LPG gas solution system of the marine vessel (105), and
wherein the heat exchanger sub-system is configured to use seawater as an intermediate medium or a heating medium, and the gas solution system may comprise at least one of the following:
LNG system; and
CNG system.

4. The method of any claim 1 to 3, wherein operational characteristics of a heat exchanger sub-system comprises at least one of the following:
information about used medium of the heat exchanger sub-system;
operation mode of the heat exchanger sub-system; and
operation status of the heat exchanger sub-system.

5. The method of any claim 1 to 4, wherein the route plan information (320) comprises at least one of the following:
navigation information for a waypoint or a port;
target time or arrival information for the waypoint or the port; and
environmental information (340) associated to at least one route (710) of the route plan information (320).

6. The method of any claim 1 to 5, further comprising:
determining energy consumption information (320) based on the dynamic control model (121), and
wherein the energy consumption information (320) represents predicted energy consumption for heat exchanger sub-system and of at least one of the following: hotel load of the marine vessel (105), at least one propulsion device of the marine vessel (105), and automation system (350) of the marine vessel (105).

7. The method of claim 6, further comprising:
determining, by the dynamic control model (121), predicted energy consumption information (320) for optional routes with different seawater temperatures; and
adjusting the route plan information (320) associated to route (710) with optimal predicted energy consumption, and
wherein the route (710) with optimal predicted energy consumption correspond to the route with lowest energy consumption.

8. The method of any claim 1 to 7, further comprising:
determining a task within the marine vessel (105) automatically based on the dynamic control model (121), and
controlling an automation element of the marine vessel (105) based on the determined task.

9. The method of claim 8, wherein the automation element of the marine vessel (105) is configured to control at least one of the following:
gas solution system;
heat exchanger sub-system;
power management system; and
navigation system.

10. The method of claim 9, wherein the automation element is configured to control the gas solution system for at least one of the following:
operation of a reliquefaction unit; and
operation of regasification unit.

11. The method of claim 9 or 10, wherein the automation element is configured to control the heat exchanger sub-system for operation of a seawater pump for pumping seawater from sea to be used as fluid for the heat exchanger sub-system.

12. The method of any claim 8 to 11, further comprising:
determining an operational plan comprising tasks to control at least one of the following:
time and location to run gas solution system related processes along a route of the route plan information (320); and
time and location to run heat exchanger sub-system related processes along a route (710) of the route plan information (320).

13. The method of any claim 1 to 12, further comprising:
determining, by the dynamic control model (121), arrival time for a waypoint based on the route plan information (320);
determining, by the dynamic control model (121), optimal speed profile for the marine vessel (105) to stay longer in colder waters and avoiding waiting time in warmer waters; and
adjusting the route plan information (320) using the optimal speed profile.

14. A marine vessel (105) control apparatus (120), comprising:
a communication interface (250) for transceiving data;
at least one processor (210); and
at least one memory (220) including computer program code;
the at least one memory (220) and the computer program code configured to, with the at least one processor (210), cause the apparatus to:
determine (810) route plan information (320) of the marine vessel (105);
determine (820) seawater characteristic information associated with the route plan information (320);
receive (830) operational characteristics of a heat exchanger sub-system of a gas solution system installed on the marine vessel (105), wherein the heat exchanger sub-system is configured to use seawater as a cooling medium;
generate (840) a dynamic control model (121) using the route plan information (320), the seawater characteristic information and the operational characteristics; and
adjust (850) the route plan information (320) based on the dynamic control model (121).

15. A computer program embodied on a computer readable medium comprising computer executable program code, which code, when executed by at least one processor (210) of an apparatus, causes the apparatus to:
determine (810) route plan information (320) of the marine vessel (105);
determine (820) seawater characteristic information associated with the route plan information (320);
receive (830) operational characteristics of a heat exchanger sub-system of a gas solution system installed on the marine vessel (105), wherein the heat exchanger sub-system is configured to use seawater as a cooling medium;
generate (840) a dynamic control model (121) using the route plan information (320), the seawater characteristic information and the operational characteristics; and
adjust (850) the route plan information (320) based on the dynamic control model (121).

## Patentansprüche

1. Computer-implementiertes Verfahren für das automatisierte Routenmanagement eines Seeschiffs (105), wobei das Verfahren umfasst:
Bestimmen (810) von Routenplaninformationen (320) des Seeschiffs (105);
Bestimmen (820) von mit den Routenplaninformationen (320) verknüpften charakteristischen Meerwasserinformationen (320);
Empfangen (830) von Betriebskenndaten eines Wärmetauscher-Teilsystems eines auf dem Seeschiff (105) installierten Gaslösungssystems, wobei das Wärmetauscher-Teilsystem so ausgelegt ist, dass es Meerwasser als Kühlmedium verwendet;
Erzeugen (840) eines dynamischen Steuerungsmodells (121) mit Hilfe der Routenplaninformationen (320), der charakteristischen Meerwasserinformationen und der Betriebskenndaten; und
Einstellen (850) der Routenplaninformationen (320) auf Grundlage des dynamischen Steuerungsmodells (121).

2. Verfahren nach Anspruch 1, wobei die charakteristischen Meerwasserinformationen mindestens eines von Folgendem umfassen:
Meerwassertemperatur-Informationen; und
Meerwassersalzgehalt-Informationen.

3. Verfahren nach Anspruch 1 oder 2, wobei das Wärmetauscher-Teilsystem betriebswirksam mit einem LPG-Gaslösungssystem des Seeschiffs (105) verbunden ist, und
wobei das Wärmetauscher-Teilsystem so ausgelegt ist, dass es Meerwasser als Zwischenmedium oder Wärmemedium verwendet, und das Gaslösungssystem mindestens eines von Folgendem umfassen kann:
LNG-System; und
CNG-System.

4. Verfahren nach einem Anspruch 1 bis 3, wobei die Betriebskenndaten eines Wärmetauscher-Teilsystems mindestens eines von Folgendem umfassen:
Informationen über das verwendete Medium des Wärmetauscher-Teilsystems;
Betriebsweise des Wärmetauscher-Teilsystems; und
Betriebsstatus des Wärmetauscher-Teilsystems.

5. Verfahren nach einem Anspruch 1 bis 4, wobei die Routenplaninformationen (320) mindestens eines von Folgendem umfassen:
Navigationsinformationen für einen Wegpunkt oder einen Hafen;
Zielzeit oder Ankunftsinformationen für den Wegpunkt oder den Hafen; und
mit mindestens einer Route (710) der Routenplaninformationen (320) verknüpfte Umgebungsinformationen (340).

6. Verfahren nach einem Anspruch 1 bis 5, ferner umfassend:
Bestimmen von Energieverbrauchsinformationen (320) auf Grundlage des dynamischen Steuerungsmodells (121), und
wobei die Energieverbrauchsinformationen (320) einen vorhergesagten Energieverbrauch für das Wärmetauscher-Teilsystem und für eines von Folgendem darstellen: Hotellast des Seeschiffs (105), mindestens eine Antriebsvorrichtung des Seeschiffs (105), und Automatisierungssystem (350) des Seeschiffs (105).

7. Verfahren nach Anspruch 6, ferner umfassend:
Bestimmen der vorhergesagten Energieverbrauchsinformationen (320) für optionale Routen mit unterschiedlichen Meerwassertemperaturen über das dynamische Steuerungsmodell (121); und
Einstellen der Routenplaninformationen (320), die mit der Route (710) mit dem optimalen vorhergesagten Energieverbrauch verknüpft sind, und
wobei die Route (710) mit dem optimalen vorhergesagten Energieverbrauch der Route mit dem niedrigsten Energieverbrauch entspricht.

8. Verfahren nach einem Anspruch 1 bis 7, ferner umfassend:
automatisches Bestimmen einer Aufgabe innerhalb des Seeschiffs (105) auf Grundlage des dynamischen Steuerungsmodells (121), und
Ansteuern eines Automatisierungselements des Seeschiffs (105) auf Grundlage der bestimmten Aufgabe.

9. Verfahren nach Anspruch 8, wobei das Automatisierungselement des Seeschiffs (105) so ausgelegt ist, dass es mindestens eines von Folgendem steuert:
Gaslösungssystem;
Wärmetauscher-Teilsystem;
Energiemanagementsystem; und
Navigationssystem.

10. Verfahren nach Anspruch 9, wobei das Automatisierungselement dazu ausgelegt ist, das Gaslösungssystem für mindestens eines von Folgendem zu steuern:
Betreiben einer Rückverflüssigungseinheit; und
Betreiben einer Regasifizierungseinheit.

11. Verfahren nach Anspruch 9 oder 10, wobei das Automatisierungselement dazu ausgelegt ist, das Wärmetauscher-Teilsystem so zu steuern, dass eine Meerwasserpumpe betrieben wird, um als Fluid für das Wärmetauscher-Teilsystem zu verwendendes Meerwasser aus dem Meer zu pumpen.

12. Verfahren nach einem Anspruch 8 bis 11, ferner umfassend:
Bestimmen eines Betriebsplans, der Steuerungsaufgaben für mindestens eines von Folgendem umfasst:
Zeit und Ort zum Ausführen von Gaslösungssystem-bezogenen Prozessen entlang einer Route der Routenplaninformationen (320); und
Zeit und Ort zum Ausführen von Wärmetauscher-Teilsystem-bezogenen Prozessen entlang einer Route (710) der Routenplaninformationen (320).

13. Verfahren nach einem Anspruch 1 bis 12, ferner umfassend:
Bestimmen einer Ankunftszeit für einen Wegpunkt auf Grundlage der Routenplaninformationen (320) über das dynamische Steuerungsmodell (121);
Bestimmen eines optimalen Geschwindigkeitsprofils für das längere Verbleiben des Seeschiffs (105) in kälteren Gewässern und Vermeiden von Wartezeit in wärmeren Gewässern über das dynamische Steuerungsmodell (121); und
Einstellen der Routenplaninformationen (320) mit Hilfe des optimalen Geschwindigkeitsprofils.

14. Seeschiff(105)-Steuerungsvorrichtung (120), umfassend:
eine Kommunikationsschnittstelle (250) zum Senden und Empfangen von Daten;
mindestens einen Prozessor (210); und
mindestens einen Speicher (220), der einen Computerprogrammcode aufweist;
wobei der mindestens eine Speicher (220) und der Computerprogrammcode dazu ausgelegt sind, mit dem mindestens einen Prozessor (210) die Vorrichtung zu Folgendem zu veranlassen:
Bestimmen (810) von Routenplaninformationen (320) des Seeschiffs (105);
Bestimmen (820) von mit den Routenplaninformationen (320) verknüpften charakteristischen Meerwasserinformationen;
Empfangen (830) von Betriebskenndaten eines Wärmetauscher-Teilsystems eines auf dem Seeschiff (105) installierten Gaslösungssystems, wobei das Wärmetauscher-Teilsystem so ausgelegt ist, dass es Meerwasser als Kühlmedium verwendet;
Erzeugen (840) eines dynamischen Steuerungsmodells (121) mit Hilfe der Routenplaninformationen (320), der charakteristischen Meerwasserinformationen und der Betriebskenndaten; und
Einstellen (850) der Routenplaninformationen (320) auf Grundlage des dynamischen Steuerungsmodells (121).

15. Auf einem computerlesbaren Medium ausgeführtes Computerprogramm, das einen computerausführbaren Programmcode umfasst, wobei der Code, bei Ausführung durch den mindestens einen Prozessor (210) einer Vorrichtung, die Vorrichtung zu Folgendem veranlasst:
Bestimmen (810) von Routenplaninformationen (320) des Seeschiffs (105);
Bestimmen (820) von mit den Routenplaninformationen (320) verknüpften charakteristischen Meerwasserinformationen;
Empfangen (830) von Betriebskenndaten eines Wärmetauscher-Teilsystems eines auf dem Seeschiff (105) installierten Gaslösungssystems, wobei das Wärmetauscher-Teilsystem so ausgelegt ist, dass es Meerwasser als Kühlmedium verwendet;
Erzeugen (840) eines dynamischen Steuerungsmodells (121) mit Hilfe der Routenplaninformationen (320), der charakteristischen Meerwasserinformationen und der Betriebskenndaten; und
Einstellen (850) der Routenplaninformationen (320) auf Grundlage des dynamischen Steuerungsmodells (121).

## Revendications

1. Procédé mis en oeuvre par ordinateur pour la gestion automatisée de l'itinéraire d'un navire maritime (105), ledit procédé comprenant les étapes consistant à :
déterminer (810) des informations de plan de route (320) du navire maritime (105);
déterminer (820) des informations d'eau de mer caractéristiques associées aux informations de plan de route (320);
recevoir (830) des caractéristiques de fonctionnement d'un sous-système échangeur de chaleur d'un système de solution de gaz installé sur le navire maritime (105), ledit sous-système échangeur de chaleur étant configuré pour utiliser de l'eau de mer comme agent refroidisseur;
générer (840) un modèle de commande dynamique (121) à l'aide des informations de plan de route (320), des informations d'eau de mer caractéristiques et des caractéristiques de fonctionnement; et
ajuster (850) les informations de plan de route (320) sur la base du modèle de commande dynamique (121).

2. Procédé selon la revendication 1, dans lequel les informations d'eau de mer caractéristiques comprennent au moins l'un parmi ce qui suit :
des informations de température de l'eau de mer; et
des informations de salinité de l'eau de mer.

3. Procédé selon la revendication 1 ou 2, dans lequel le sous-système échangeur de chaleur est relié opérationnellement à un système de solution de gaz LPG du navire maritime (105), et
dans lequel le sous-système échangeur de chaleur est configuré pour utiliser de l'eau de mer comme agent intermédiaire ou agent caloporteur, et le système de solution de gaz peut comprendre au moins l'un parmi ce qui suit :
un système LNG; et
un système CNG.

4. Procédé selon l'une des revendications 1 à 3, dans lequel les caractéristiques de fonctionnement d'un sous-système échangeur de chaleur comprennent au moins l'un parmi ce qui suit :
des informations sur l'agent utilisé du sous-système échangeur de chaleur;
un mode de fonctionnement du sous-système échangeur de chaleur; et
un état de fonctionnement du sous-système échangeur de chaleur.

5. Procédé selon l'une des revendications 1 à 4, dans lequel les informations de plan de route (320) comprennent au moins l'un parmi ce qui suit :
des informations de navigation pour un point de cheminement ou un port;
l'heure cible ou des informations d'arrivée pour le point de cheminement ou le port; et
des informations ambiantes (340) associées à au moins un itinéraire (710) des informations de plan de route (320).

6. Procédé selon l'une des revendications 1 à 5, comprenant également les étapes consistant à :
déterminer des informations de consommation énergétique (320) sur la base du modèle de commande dynamique (121), et
lesdites informations de consommation énergétique (320) représentant une consommation énergétique prédictive pour le sous-système échangeur de chaleur et l'un parmi ce qui suit : la charge hôtelière du navire maritime (105), au moins un dispositif propulseur du navire maritime (105), et un système d'automatisation (350) du navire maritime (105).

7. Procédé selon la revendication 6, comprenant également les étapes consistant à :
déterminer, par le modèle de commande dynamique (121), les informations de consommation énergétique prédictive (320) pour des itinéraires facultatifs avec des températures d'eau de mer différentes; et
ajuster les informations de plan de route (320) associées à l'itinéraire (710) avec une consommation énergétique prédictive optimale, et
dans lequel l'itinéraire (710) avec la consommation énergétique prédictive optimale correspondant à l'itinéraire avec la consommation énergétique la plus faible.

8. Procédé selon l'une des revendications 1 à 7, comprenant également les étapes consistant à :
déterminer automatiquement une tâche à l'intérieur du navire maritime (105) sur la base du modèle de commande dynamique (121), et
commander un élément d'automatisation d'un navire maritime (105) sur la base de la tâche déterminée.

9. Procédé selon la revendication 8, dans lequel l'élément d'automatisation du navire maritime (105) est configuré pour commander au moins l'un parmi ce qui suit :
système de solution de gaz;
sous-système échangeur de chaleur;
système de management énergétique; et
système de navigation.

10. Procédé selon la revendication 9, dans lequel l'élément d'automatisation est configuré pour commander le système de solution de gaz pour au moins l'un parmi ce qui suit :
exploitation d'une unité de reliquéfaction; et
exploitation d'une unité de regazéification.

11. Procédé selon la revendication 9 ou 10, dans lequel l'élément d'automatisation est configuré pour commander le sous-système échangeur de chaleur de manière à actionner une pompe à eau de mer pour aspirer, dans la mer, de l'eau de mer à utiliser comme fluide pour le sous-système échangeur de chaleur.

12. Procédé selon l'une des revendications 8 à 11, comprenant également les étapes consistant à :
déterminer un plan opérationnel comprenant des tâches pour commander au moins l'un parmi ce qui suit :
temps et lieu pour effectuer des processus liés au système de solution de gaz le long d'un itinéraire des informations de plan de route (320); et
temps et lieu pour effectuer des processus liés au sous-système échangeur de chaleur le long d'un itinéraire (710) des informations de plan de route (320).

13. Procédé selon l'une des revendications 1 à 12, comprenant également les étapes consistant à :
déterminer, par le modèle de commande dynamique (121), un temps d'arrivée pour un point de cheminement sur la base des informations de plan de route (320);
déterminer, par le modèle de commande dynamique (121), un profil de vitesse optimal pour que le navire maritime (105) demeure plus longtemps dans les eaux plus froides et pour éviter des temps d'attente dans les eaux plus chaudes; et
ajuster les informations de plan de route (320) à l'aide du profil de vitesse optimal.

14. Appareil de commande (120) de navire maritime (120), comprenant :
une interface de communication (250) pour l'émission-réception de données;
au moins un processeur (210); et
au moins une mémoire (220) comportant un code de programme informatique;
ladite au moins une mémoire (220) et ledit code de programme informatique étant configurés pour amener, avec ledit au moins un processeur (210), l'appareil à :
déterminer (810) des informations de plan de route (320) du navire maritime (105);
déterminer (820) des informations d'eau de mer caractéristiques associées aux informations de plan de route (320);
recevoir (830) des caractéristiques de fonctionnement d'un sous-système échangeur de chaleur d'un système de solution de gaz installé sur le navire maritime (105), ledit sous-système échangeur de chaleur étant configuré pour utiliser de l'eau de mer comme agent refroidisseur;
générer (840) un modèle de commande dynamique (121) à l'aide des informations de plan de route (320), des informations d'eau de mer caractéristiques et des caractéristiques de fonctionnement; et
ajuster (850) les informations de plan de route (320) sur la base du modèle de commande dynamique (121).

15. Programme informatique incorporé dans un support lisible par ordinateur, comprenant un code de programme exécutable par un ordinateur, ledit code, lorsqu'il est exécuté par ledit au moins un processeur (210) d'un appareil, amenant l'appareil à :
déterminer (810) des informations de plan de route (320) du navire maritime (105);
déterminer (820) des informations d'eau de mer caractéristiques associées aux informations de plan de route (320);
recevoir (830) des caractéristiques de fonctionnement d'un sous-système échangeur de chaleur d'un système de solution de gaz installé sur le navire maritime (105), ledit sous-système échangeur de chaleur étant configuré pour utiliser de l'eau de mer comme agent refroidisseur;
générer (840) un modèle de commande dynamique (121) à l'aide des informations de plan de route (320), des informations d'eau de mer caractéristiques et des caractéristiques de fonctionnement; et
ajuster (850) les informations de plan de route (320) sur la base du modèle de commande dynamique (121).
